# EUROPÄISCHE PATENTSCHRIFT

(11) **EP 2 027 613 B1**
(45) Veröffentlichungstag und Bekanntmachung des Hinweises auf die Patenterteilung: **05.05.2010**
(21) Anmeldenummer: 07729799.2
(22) Anmeldetag: 01.06.2007
(51) Int. Cl.: H01L 41/09

(54) **FESTKÖRPERAKTOR-ANTRIEBSVORRICHTUNG BZW. VERFAHREN ZUM ANTREIBEN EINER FESTKÖRPERAKTOR-ANTRIEBSVORRICHTUNG**
SOLID-STATE ACTUATOR DRIVE APPARATUS AND METHOD FOR DRIVING A SOLID-STATE ACTUATOR DRIVE APPARATUS
DISPOSITIF D'ENTRAÎNEMENT D'ACTIONNEUR DE CORPS À L'ETAT SOLIDE OU PROCÉDÉ POUR ENTRAÎNER UN DISPOSITIF D'ENTRAÎNEMENT D'ACTIONNEUR DE CORPS À L'ETAT SOLIDE

(30) Priorität: 13.06.2006 DE 102006027409
(43) Veröffentlichungstag der Anmeldung: 25.02.2009
(73) Patentinhaber: SIEMENS AKTIENGESELLSCHAFT, 80333 München (DE)
(72) Erfinder: GOTTLIEB, Bernhard, 81739 München (DE); KAPPEL, Andreas, 85649 Brunnthal (DE); SCHWEBEL, Tim, 80337 München (DE); WALLENHAUER, Carsten, 01987 Schwarzheide (DE)
(86) Internationale Anmeldenummer: PCT/EP2007/055399
(87) Internationale Veröffentlichungsnummer: WO 2007/144276

(56) Entgegenhaltungen:
- EP-A- 1 143 535

## Beschreibung

Die Erfindung bezieht sich auf eine Festkörperaktor-Antriebsvorrichtung mit den oberbegrifflichen Merkmalen gemäß Patentanspruch 1 bzw. auf ein Verfahren zum Antreiben einer solchen Festkörperaktor-Antriebsvorrichtung.

DE 199 52 946 A1 beschreibt eine Festkörperaktor-Antriebsvorrichtung in Form eines piezoelektrischen Antriebs, der auch als Piezoringmotor bezeichnet wird. Ein Antriebskörper, welcher einen ringförmigen Körper aufweist, hat eine durch diesen hindurchführende Antriebskörperöffnung. Durch die Antriebskörperöffnung führt eine Welle, wobei ein Außenumfang der Welle geringfügig geringer als ein Innenumfang der Antriebskörperöffnung ist. Im Betrieb zum Antreiben der Welle ist eine zentrale Längs- bzw. Rotationsachse der Welle so gegenüber einer zentralen Achse der Antriebskörperöffnung versetzt, dass die Welle mit ihrem Außenumfang an zumindest einem Punkt des Innenumfangs der Antriebskörperöffnung anliegt. Mittels eines ersten und eines zweiten Festkörperaktors ist der Antriebskörper in eine zweidimensionale translatorische Bewegung in einer Ebene senkrecht zu der Wellenachse antreibbar, wodurch die Welle in Rotation versetzt wird.

Ein weiteres Beispiel findet sich in EP 1143535.

Die Festkörperaktor-Antriebsvorrichtung als ein Stellantrieb zeichnet sich unter anderem durch ein hohes Drehmoment, eine hohe Stellgenauigkeit, eine flache Bauform und inhärente Sensoreigenschaften aus. In vielen Anwendungen kommt jedoch die Gesamtheit dieser Eigenschaften nicht zum Tragen. Vielmehr haben einzelne eine besondere Bedeutung, wohingegen andere in dieser Form nicht erforderlich sind.

Um Anordnungen mit Wellen zur Verstellung von verschiedenen Komponenten oder zur Verstellung einer Komponente in zwei zueinander nicht parallelen Ebenen verstellen zu können, kommen Miniaturelektromotoren mit einem Getriebe zum Einsatz. Dies hat einen komplizierten mechanischen Aufbau zur Folge.

Die Aufgabe der Erfindung besteht darin, eine Festkörperaktor-Antriebsvorrichtung bzw. ein Verfahren zum Antreiben einer solchen Festkörperaktor-Antriebsvorrichtung weiterzuentwickeln, so dass auch ein Einsatz in Verbindung mit mehrachsigen Rotationsanordnungen ermöglicht wird.

Diese Aufgabe wird durch die Festkörperaktor-Antriebsvorrichtung mit den Merkmalen gemäß Patentanspruch 1 bzw. durch das Verfahren zum Antreiben einer solchen Festkörperaktor-Antriebsvorrichtung mit den Merkmalen gemäß Patentanspruch 11 gelöst. Vorteilhafte Ausgestaltungen sind Gegenstand abhängiger Ansprüche.

Bevorzugt wird demgemäß insbesondere eine Festkörperaktor-Antriebsvorrichtung mit einem ersten Antriebskörper, einer Antriebskörperöffnung in dem Antriebskörper, einer in die Antriebskörperöffnung zumindest hineinführenden ersten Welle bzw. durch diese hindurchführenden ersten Welle und einem ersten und einem zweiten Festkörperaktor zum Antreiben des Antriebskörpers in eine die Welle in Rotation versetzende translatorische Bewegung. Vorteilhaft wird diese Festkörperaktor-Antriebsvorrichtung dadurch, dass ein zweiter Antriebskörper mit einer Antriebskörperöffnung über eine Koppeleinrichtung an dem ersten Antriebskörper angekoppelt ist und ein dritter Festkörperaktor zum Antreiben des zweiten Antriebskörpers und einer in dessen Aktoröffnung zumindest hineinführenden zweiten Welle an dem zweiten Antriebskörper angeordnet ist.

Die Festkörperaktor-Antriebsvorrichtung baut somit auf der für sich bekannten Technologie von Piezoringmotoren auf, um ein an eine Gruppe von Applikationen angepasstes Antriebssystem darzustellen. Vorteilhaft wird eine Kombination von mehreren Antrieben und Antriebskomponenten zu einem Antriebssystem mit mindestens zwei Wellen ausgebildet. Die Festkörperaktor-Antriebsvorrichtung stellt ein kompaktes, geräuscharmes Antriebssystem mit zwei oder mehr in Rotation versetzbaren Wellen dar. Insbesondere für sich langsam drehende Wellen für einen geringen bis mittlere Drehmomentbedarf ist die Festkörperaktor-Antriebsvorrichtung vorteilhaft einsetzbar. Vorteilhaft sind insbesondere ein stark reduziertes Bauvolumen gegenüber elektromotorischen Antrieben, eine vereinfachte Ansteuerelektronik, eine hohe Stellgenauigkeit mit auch der Möglichkeit einer einfachen Umsetzung von Memoryfunktionen und die Ansteuerung beliebig kleiner Drehzahlen.

Vorzugsweise ist der zweite Festkörperaktor sowohl den ersten als auch den zweiten Antriebskörper direkt antreibend angeordnet. Dadurch können Anordnungen mit zwei solchen Antriebskörpern durch lediglich drei Festkörperaktoren angetrieben werden, was eine kostengünstige und baulich raumsparende Ausgestaltung ermöglicht. In einem solchen Fall ist der zweite Festkörperaktor gemäß einer bevorzugten Ausgestaltung die Koppeleinrichtung seitlich übergreifend angeordnet.

Vorzugsweise wird eine Antriebsbewegung des ersten und/oder des zweiten Festkörperaktors über die Koppeleinrichtung auf den zweiten Antriebskörper zumindest anteilig übertragen. Dadurch kann eine Ausgestaltung mit nur drei Festkörperaktoren ermöglicht werden. Entsprechend werden Ausgestaltungen bevorzugt, bei welchen eine Antriebsbewegung des dritten Festkörperaktors über die Koppeleinrichtung auf den ersten Antriebskörper zumindest anteilig übertragen werden. Auch dies unterstützt Bemühungen zur Reduzierung der Gesamtanzahl von teuren Festkörperaktoren.

Die Koppeleinrichtung ist vorzugsweise als eine gelenkige Verbindung ausgebildet zum Verschwenken des ersten Antriebskörpers gegenüber dem zweiten Antriebskörper. Eine Verschwenkung kann dabei insbesondere um eine der Koppeleinrichtung zugeordnete Verschwenkachse erfolgen, welche achsparallel zur Rotationsachse der Wellen verläuft. Jedoch können auch Verschwenkungen umgesetzt werden, welche in anderen Ebenen verlaufen, insbesondere in einer Ebene senkrecht zur Rotationsachse zumindest einer der beiden Wellen.

Vorteilhaft sind auch Ausgestaltungen, bei welchen die Koppeleinrichtung als gelenkige Verbindung ausgebildet ist zum translatorischen Versetzen des ersten Antriebskörpers seitlich zum zweiten Antriebskörper, so dass diese mit ihren benachbarten Seitenflächen seitlich zueinander versetzt werden. Insbesondere bei einer solchen Ausgestaltung können auch zwei oder mehr derartige gelenkige Verbindungen zwischen den beiden Antriebskörpern angeordnet sein.

Besonders bevorzugt werden Ausgestaltungen, bei welchen die Koppeleinrichtung als ein Festkörpergelenk ausgebildet ist und die beiden Antriebskörper somit einstückig ausbildend verbindet. Erzielbar ist eine derartige Ausgestaltung auf einfache Art und Weise durch die Ausbildung zweier Antriebskörper aus einem einzigen Werkstück, in welches ein Schlitz derart eingebracht wird, dass die beiden Antriebskörper lediglich über einen schmalen verbleibenden Steg verbunden werden, welcher dann ein solches Festkörpergelenk ausbildet.

Vorteilhaft können die Antriebskörper mittels der Koppeleinrichtung derart gekoppelt sein, dass die beiden Antriebskörper bezüglich Achsen ihrer Antriebskörperöffnungen nicht achsparallel angeordnet und/oder in Bewegung versetzbar sind. Solche Ausgestaltungen ermöglichen ein Verkippen der beiden Antriebskörper relativ zueinander derart, dass die beiden Wellen bzw. deren Rotationsachsen nicht mehr achsparallel zueinander sondern unter einem Winkel zueinander verlaufen.

Zur Ansteuerung der drei Festkörperaktoren dient vorzugsweise eine Steuereinrichtung in Art einer integrierten Schaltungsanordnung, wobei jedoch alternativ auch feste Verdrahtungen der Festkörperaktoren untereinander derart vorgenommen werden können, dass die Wellen in gewünschten Verhältnissen zueinander in Rotation versetzbar sind.

Verfahrensgemäß bevorzugt wird ein Verfahren zum Antreiben einer derartigen Festkörperaktor-Antriebsvorrichtung, bei der die zumindest drei Festkörperaktoren aufeinander abgestimmt angesteuert werden zum eigenständigen Antreiben der ersten Welle unabhängig von der zweiten Welle. Gegebenenfalls wird die Ansteuerung derart vorgenommen, dass die erste und die zweite Welle voneinander drehzahlabhängig angesteuert werden. Bevorzugt sind die Wellen bezüglich Drehrichtung, Start und Stopp voneinander unabhängig ansteuerbar. Eine Drehrichtung der Wellen kann insbesondere durch eine Phasenlage eines Ansteuersignals des ersten und/oder zweiten Festkörperaktors in Bezug auf eine Ansteuerfunktion des dritten Festkörperaktors eingestellt werden.

Die Ansteuerung mit einer Steuereinrichtung, einer festen Verschaltung bzw. der verfahrensgemäßen Steuerung der Festkörperaktoren auf eine Weise, welche die Nutzung der Antriebsleistung eines Aktors zum Treiben von mindestens zwei Antriebsringen bzw. Antriebskörpern ermöglicht, kann vorteilhaft auf verschiedene Art und Weise umgesetzt werden. Wesentliche Vorteile des ursprünglichen unabhängigen Antriebes bleiben dabei erhalten. Insbesondere können nur bedingt voneinander abhängige oder sogar vollkommen unabhängige Ansteuerungen der einzelnen Wellen bewirkt werden.

Die Festkörperaktor-Antriebsvorrichtung ist für Applikationen geeignet, bei denen auf kleinstem Raum preiswerte Antriebe zur genauen Positionierung mit mindestens zwei Freiheitsgraden benötigt werden. Vorteilhafte Anwendungsmöglichkeiten gibt es beispielsweise im Bereich elektrisch verstellbarer Außenspiegel im Automotivbereich, der Ausrichtung von LC-Displays (LC: Liquid Crystal / Flüssigkristall) oder von XY-Manipulatoren.

Unter Festkörperaktoren sind nicht nur piezo-elektrische Festkörperaktoren zu verstehen, sondern auch andersartige Festkörperaktoren, wie beispielsweise magnetostriktive oder elektrostriktive Aktoren. Wesentlich ist, dass es sich um Antriebssysteme, insbesondere lineare Antriebssysteme handelt, welche die Antriebskörper in eine geeignete translatorische Bewegung in zwei Dimensionen einer aufgespannten Ebene um die Rotationsachsen der Wellen herum geeignet antreiben können. Insbesondere sind dabei auch Anordnungen zu berücksichtigen, bei welchen alle Festkörperaktoren achsparallel zueinander auf einer Seite der Gesamtanordnung angeordnet sind und durch eine entsprechend geeignete Ansteuerung den Antriebskörper in die erforderliche translatorische Bewegung setzen.

Ein Ausführungsbeispiel der Erfindung wird nachfolgend anhand der Zeichnung näher erläutert. Es zeigen:
- Fig. 1: eine Draufsicht auf eine erste Festkörperaktor-Antriebsvorrichtung mit zwei miteinander gelenkig gekoppelten Antriebskörpern, welche jeweils zum Antreiben einer Welle ausgebildet sind;
- Fig. 2: die Anordnung gemäß Fig. 1 in einer zweiten Betriebsstellung;
- Fig. 3: eine zweite Ausführungsform mit einer gegenüber Fig. 1 geänderten Anordnung eines dritten Festkörperaktors;
- Fig. 4: eine zweite Betriebsstellung der Anordnung gemäß Fig. 3 und
- Fig. 5: eine dritte Ausführungsform.

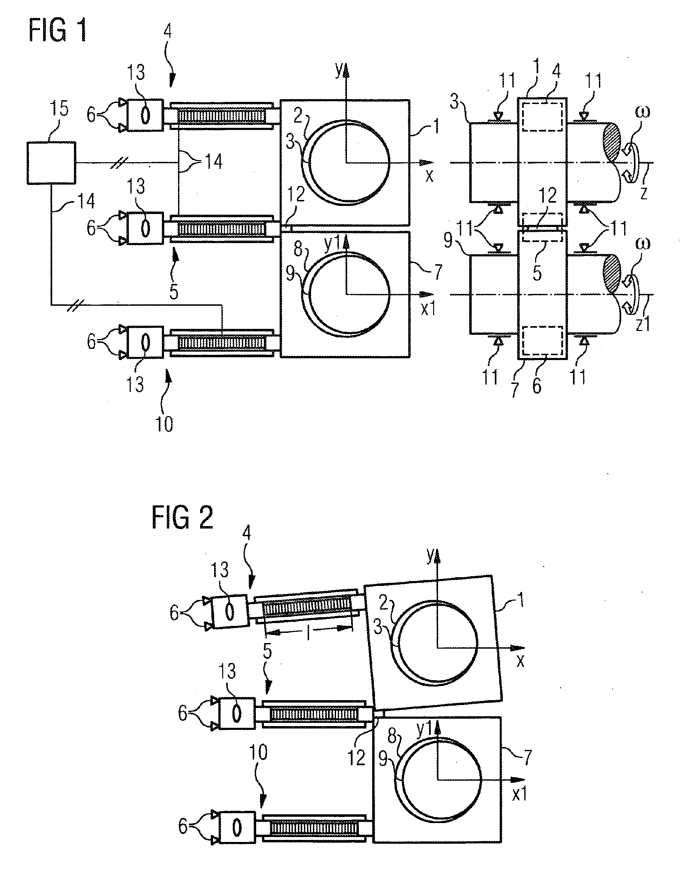

Fig. 1 und 2 zeigen eine Festkörperaktor-Antriebsvorrichtung mit zwei Antriebskörpern 1, 7 zum Antreiben zweier Wellen 3, 9. Jeder der Antriebskörper 1, 7 weist eine Antriebskörperöffnung 2 bzw. 8 auf, in welche jeweils eine der Wellen 3, 9 zumindest hineinführt bzw. durch welche jeweils eine der Wellen 3, 9 wie dargestellt hindurchführt. Links in Fig. 1 ist dabei eine Draufsicht auf eine beispielhafte Anordnung skizziert, während rechts in Fig. 1 eine Seitenansicht dieser Anordnung skizziert ist. Die beiden Antriebskörper 1, 7 erstrecken sich in einer Ebene x, y bzw. x1, y1 senkrecht zur Wellenachse bzw. Rotationsachse z, z1 der ersten bzw. der zweiten Welle 3, 9.

Die beiden Antriebskörper 1, 7 sind über eine Koppeleinrichtung 12 miteinander derart gekoppelt, dass sie eine jeweils bedingt eigenständige Bewegung in der aufgespannten Ebene x, y bzw. x1, y1 durchführen können. Bei der Koppeleinrichtung 12 handelt es sich vorzugsweise um eine gelenkige Verbindung in Art eines Festkörpergelenks. Auf einfache Art und Weise ist eine solche Anordnung herstellbar, indem in einen länglichen Körper ein Schlitz eingebracht wird. Dabei wird lediglich ein schmaler Steg belassen, welcher die Koppeleinrichtung 12 in Art des Festkörpergelenks ausbildet. Über die Koppeleinrichtung 12 sind die beiden Antriebskörper 1, 7 derart miteinander gekoppelt, dass eine Bewegung des ersten Antriebskörpers 1 teilweise auf den zweiten Antriebskörper 7 übertragen wird und eine Bewegung des zweiten Antriebskörpers 7 zumindest teilweise auf den ersten Antriebskörper 1 übertragen wird.

Zum Antreiben der beiden Antriebskörper 1, 7 dienen bei dem dargestellten Ausführungsbeispiel ein erster Festkörperaktor 4, ein zweiter Festkörperaktor 5 und ein dritter Festkörperaktor 10, welche mittels einer Steuereinrichtung 15 und entsprechende Verdrahtungen 14 derart angesteuert werden, dass unter Berücksichtigung der Bewegungsübertragung und/oder Kraftübertragung über die Koppeleinrichtung 12 die beiden Wellen 3, 9 wahlweise miteinander gekoppelt oder auch unabhängig voneinander in Rotation ω versetzbar sind. Soll beispielsweise nur die erste Welle 3 in Rotation versetzt werden, die zweite Welle 9 jedoch nicht rotieren, würden der erste und der zweite Festkörperaktor 4, 5 derart angesteuert, dass der erste Antriebskörper 1 die erste Welle 3 in Rotation versetzt, während der dritte Festkörperaktor 10 derart angesteuert wird, dass er die über den zweiten Festkörperaktor 5 auf den zweiten Antriebskörper 7 einwirkenden Kräfte und Bewegungen kompensiert. Auf einfache Art und Weise sind durch entsprechende Ansteuerungen der Festkörperaktoren 4, 5, 10 entsprechend eine oder beide der Wellen 3, 9 voneinander unabhängig oder abhängig voneinander in Rotation versetzbar.

Die drei Festkörperaktoren 4, 5, 10 sind in üblicher Art und Weise mit ihrem den Antriebskörpern 1, 7 gegenüberliegenden Endabschnitten an einer Wandung eines Gehäuses mittels entsprechenden Befestigungselementen oder Abstützelementen 6 befestigt bzw. gelagert. Um gegebenenfalls erforderliche Verschwenkungen der Festkörperaktoren 4, 5, 10 bezüglich ihrer Längsachsen relativ zueinander zu ermöglichen, sind die den Antriebskörpern 1, 7 abgewandten Enden über Langlöcher 13 vorzugsweise in seitlicher Richtung zu ihrer Längsachse verstellbar gelagert. Dies kann über Stifte erfolgen, welche vom Gehäuse aus durch die Langlöcher 13 hindurchragen. Die den Antriebskörpern 1, 7 zugewandten Enden der Festkörperaktoren 4, 5, 10 sind vorzugsweise fest mit den Antriebskörpern 1, 7 verbunden, wobei gegebenenfalls auch gelenkige Verbindungen einsetzbar sind. In üblicher Art und Weise für derartige Festkörperaktor-Antriebsvorrichtungen sind die Wellen 3, 9 über entsprechende Lager 11 in dem Gehäuse gelagert, wie dies für sich bekannt ist.

Langlöcher 13 sind jedoch nicht zwingend erforderlich. Insbesondere aufgrund elastischer Eigenschaften und/oder Biegefähigkeit der Festkörperaktoren 4, 5, 10 und mit Blick auf die geringen Auslenkungen der Festkörperaktoren 4, 5, 10 können Querbewegungen gegebenenfalls auch ohne solche Langlöcher 13 ausgeglichen oder toleriert werden.

Fig. 2 zeigt eine zweite Betriebsstellung, bei welcher der erste Festkörperaktor 4 eine verkürzte Länge 1 aufweist, welche durch eine Kontraktion der aktiven Elemente des ersten Festkörperaktors 4 bewirkt wird. Dadurch wird der erste Antriebskörper 1 relativ zum zweiten Antriebskörper 7 verkippt, wobei eine form- und/oder reibschlüssige Lagerung der ersten Welle 3 in der Antriebskörperöffnung 2 des ersten Antriebskörpers 1 eine Rotation der ersten Welle 3 bewirkt. Die zweite Welle 9 im zweiten Antriebskörper 7 bleibt hingegen in ihrer vorherigen Position stehen. Fig. 2 dient dabei lediglich zur Verdeutlichung des Grundprinzips, dass die beiden Antriebskörper 1, 7 relativ zueinander um die Koppeleinrichtung 12 verschwenkbar angeordnet sind.

Grundlage der Funktion eines solchen Antriebes stellt die durch die Aktoren verursachte pseudo-kreisförmige Translation eines verschiebbar gelagerten Antriebskörpers in der xy-Ebene dar. Im Inneren der Antriebskörper 1, 7 bzw. in deren Antriebskörperöffnung 2, 8 befindet sich jeweils die drehbar und fest im Raum gelagerte Welle 3 bzw. 9, die einen im Vergleich zum Innendurchmesser der Antriebskörperöffnung 2, 8 des Antriebskörpers 1, 7 kleineren Außendurchmesser aufweist. Durch die Auslenkung des Antriebskörpers 1, 7 bezüglich der Welle 3, 9 kommt es in einem Punkt bzw. in einer Linie zum Kontakt zwischen der Welle 3, 9 und dem Antriebskörper 1, 7. Durch die kreisförmige Translation des Antriebskörpers 1, 7 läuft dieser Kontaktpunkt entgegen der Translationsrichtung des Antriebskörpers 1, 7 um die Welle 3, 9. Die Welle 3, 9 dreht sich daraus resultierend entgegen der Translationsrichtung des Antriebskörpers 1, 7. Unabhängig von der Anordnung der Aktoren, insbesondere Festkörperaktoren, und ausgehend von diesem Funktionsprinzip werden die Antriebskörper 1, 7 kreisförmig in Translation versetzt, um die im Inneren des Antriebskörpers 1, 7 drehbar und fest gelagerte Welle 3, 9 anzutreiben.

Der Doppel-Antriebskörper ist geschlitzt ausgeführt, wodurch ein Festkörpergelenk als die Koppeleinrichtung 12 ausgebildet wird. Die beiden Einzelantriebs-Antriebskörper 1, 7 sind dadurch zueinander verkippbar, wie dies in Fig. 2 dargestellt ist. Der zweite Festkörperaktor 5 ist so am durch die gekoppelten Antriebskörper 1, 3 gebildeten Doppel-Antriebskörper befestigt, dass er eine Verschiebung des Festkörpergelenkes 12 in x-Richtung bewirkt. Die Verschiebung wirkt dadurch auf beide Einzelantriebs-Antriebskörper 1, 7. Der erste Festkörperaktor 4 und der dritte Festkörperaktor 10 sind jeweils an den entgegen gesetzten Enden des Doppel-Antriebskörpers und parallel zum zweiten Festkörperaktor 5 angebracht. Der erste und der dritte der Festkörperaktoren 4, 10 wirken jeweils nur auf einen Teil des Doppel-Antriebskörpers, das heißt auf einen einzelnen der Einzelantriebs-Antriebskörper 1 bzw. 7. Durch die Ansteuerung des ersten Festkörperaktors 4 und des dritten Festkörperaktors 10 wird die zu steuernde Antriebswelle 3 und/oder 9 ausgewählt.

Die Ansteuerung der Festkörperaktoren 4, 5, 10 erfolgt mittels der Steuereinrichtung 15 vorzugsweise mit einem offsetverschobenen Sinussignal-Zeitsignal der Spannung und/oder Piezoladung am jeweiligen Festkörperaktor 4, 5, 10. In Abhängigkeit von der gewünschten Drehrichtung und den zu treibenden Antriebswellen 3, 9 werden unterschiedliche Phasenlagen der Ansteuersignale gewählt. Entscheidend ist, dass die Ansteuerfunktionen zu einer pseudo-kreisförmigen Translation der einzelnen Antriebskörper 1, 7 führen. Soll eine Welle 3, 9 nicht angesteuert werden, so wird der für den Einzelantriebs-Antriebskörper zuständige Festkörperaktor 4, 10 z.B. mit einem konstanten Spannungs- oder Ladungsoffset beaufschlagt.

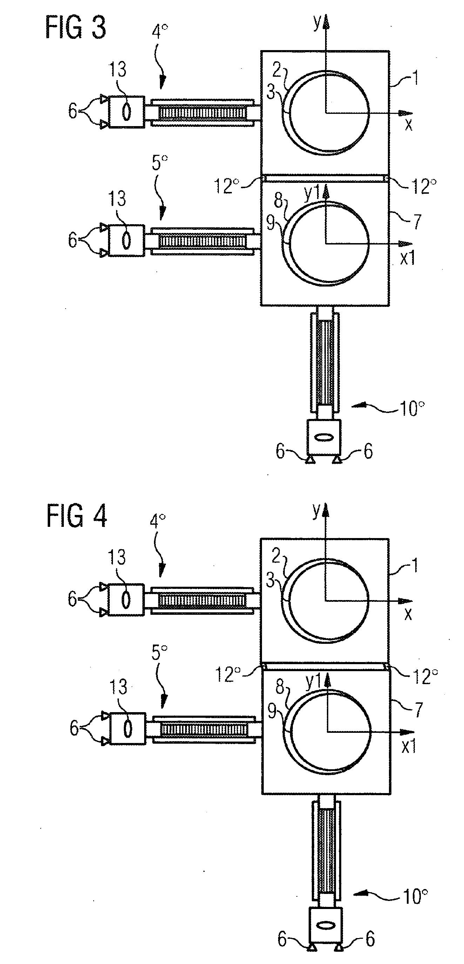

Fig. 3 und 4 zeigen eine zweite Ausführungsform einer Festkörperaktor-Antriebsvorrichtung, wobei lediglich Komponenten und Funktionen beschrieben werden, welche einen Unterschied zu der ersten Ausführungsform gemäß Fig. 1 und 2 bilden. Soweit Bezugszeichen gleich wie in Fig. 1 und 2 sind, wird auf gleiche oder gleich wirkende Komponenten und Funktionen verwiesen und entsprechend auf die Ausführungen zu Fig. 1 und 2 verwiesen.

Einen Unterschied bildet die zweite Ausführungsform durch die Ausgestaltung der Koppeleinrichtung 12°, welche durch zwei voneinander beabstandete gelenkige Elemente ausgebildet ist. Dadurch kann der erste Antriebskörper 1 nicht mehr gegenüber dem zweiten Antriebskörper 7 verschwenkt werden. Die beiden Antriebskörper 1, 7 sind in einer lateralen Bewegung relativ zueinander verstellbar, wobei die Verstellbewegungen bei der skizzierten Ausführungsform in der ersten Richtung y bzw. y1 durch eine Annäherung der beiden Antriebskörper 1, 7 bzw. Beabstandung erfolgt, während die Bewegung in der zweiten Richtung x bzw. x1 parallel zueinander erfolgt.

Einen weiteren Unterschied bildet die Anordnung der drei Festkörperaktoren 4°, 5°, 10° im Vergleich zu der ersten Ausführungsform. Die beiden ersten Festkörperaktoren 4°, 5° sind nicht mehr im Bereich der äußeren Enden des ersten Antriebskörpers 1 und im Fall des zweiten Festkörperaktors 5 die Koppeleinrichtung überlagernd und übergreifend angeordnet. Bei der zweiten Ausführungsform sind diese beiden ersten Festkörperaktoren 4°, 5° auf Höhe der Mitte der beiden Antriebskörper 1, 7 versetzt, so dass die Längsachse des ersten und des zweiten Festkörperaktors 4°, 5° in Richtung der Mitte der Antriebskörperöffnungen 2 bzw. 8 weisen. Der dritte Festkörperaktor 10° ist bezüglich seiner Längsachse um 90° zu den beiden anderen Festkörperaktoren 4°, 5° versetzt an dem zweiten Antriebskörper 7 angeordnet. Auch der dritte Festkörperaktor 10° weist dabei mit seiner zentralen Längsachse, in welcher er sich zusammenzieht und/oder ausdehnt, in Richtung der Mitte der Antriebskörperöffnung 8 des zweiten Antriebskörpers 7. Der zweite und der dritte Festkörperaktor 5°, 10° sind somit in einer ebenfalls für sich bekannten Konstellation am zweiten Antriebskörper 7 angeordnet und entsprechend in für sich bekannter Art und Weise ansteuerbar. Vorzugsweise wird bei einer Ansteuerung der erste Festkörperaktor 4° entsprechend abgestimmt auf die Ansteuerungen des zweiten und des dritten Festkörperaktors 5°, 10° angesteuert.

Der aus den beiden Antriebskörpern 1, 7 gebildete Doppel-Antriebskörper ist über eine Festkörpergelenkanordnung mit z.B. zwei Festkörpergelenken 12° so ausgeführt, dass die Einzelantriebs-Antriebskörper 1, 7 in x-Richtung eine geringe und in y-Richtung eine hohe Steifigkeit aufweisen. Die beiden einzelnen Antriebskörper 1, 7 sind dadurch in x-Richtung gegeneinander verschiebbar, wie dies in Fig. 4 skizziert ist. Der dritte Festkörperaktor 10° ist in y-Richtung so am Doppel-Antriebskörper angebracht, dass er eine gleichzeitige Verschiebung beider Einzelantriebs-Antriebskörper 1, 7 in y-Richtung ermöglicht. Der erste Festkörperaktor 4° und der zweite Festkörperaktor 5° sind in x-Richtung jeweils leicht in Richtung des Festkörpergelenkes verschoben und vorzugsweise etwa in mittlerer Höhe eines jeden Einzelantriebs-Antriebskörpers 1, 7 angebracht. Beide, der erste und der zweite der Festkörperaktoren 4°, 5° wirken jeweils nur auf einen Teil des Doppel-Antriebskörpers, das heißt jeweils nur auf einen Einzelantriebs-Antriebskörper 1 oder 7. Durch die Ansteuerung der beiden ersten Festkörperaktoren 4° und 5° wird die zu steuernde Antriebswelle 3 bzw. 9 ausgewählt.

Die Ansteuerung der beiden ersten Festkörperaktoren 4°, 5° erfolgt mit einem sinusförmigen Zeitsignal.der Festkörperaktorspannung oder Festkörperaktorladung. Der dritte Festkörperaktor 10° wird mit einem kosinusförmigen Zeitsignal angesteuert. Soll eine der Wellen 3, 9 nicht angesteuert werden, so wird der für den entsprechenden Einzelantriebs-Antriebskörper 1 bzw. 7 zuständige erste bzw. zweite Festkörperaktor 4°, 5° mit einem konstanten Spannungs- oder Ladungsoffset beaufschlagt. Die Drehrichtung wird durch die Phasenlage des Ansteuersignals des ersten und/oder zweiten Festkörperaktors 4° oder 5° im Bezug auf die Ansteuerfunktion des dritten Festkörperaktors 10° eingestellt. Die Ansteuerfunktionen werden so gewählt, dass sie zu einer kreisförmigen Translation der Einzelantriebs-Antriebskörper 1, 7 führen.

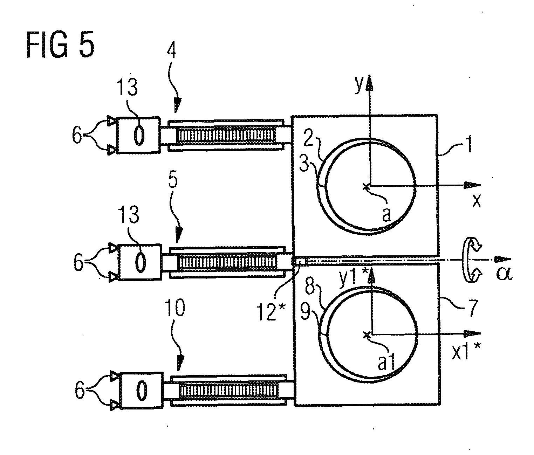

Gemäß einer in Fig. 5 skizzierten dritten Ausführungsform können die Einzelantriebskörper 7 unter beliebigen Winkeln in einer Richtung einer Achse a senkrecht zur von der Antriebskörperöffnung 2 des ersten Antriebskörpers 1 aufgespannten Ebene x, y verkippt zueinander gekoppelt werden. Ausgehend von der ersten Ausführungsform ist dadurch eine alternative Koppeleinrichtung 12* zum Verbinden des ersten und des zweiten Antriebskörpers 7 ausgebildet. Diese alternative Koppeleinrichtung 12* ermöglicht eine Verschwenkung um eine Achse α derart, dass die vom zweiten Antriebskörper 7 aufgespannte Ebene x1*, y1* um die Verschwenkungsachse α relativ zu der Ebene x, y verschwenkbar ist, welche durch den ersten Antriebskörper 1 aufgespannt wird.

Möglich ist eine Vielzahl von Variationen und Kombinationen der dargestellten Ausführungsformen. In den Fig. 1 - 5 sind Antriebssysteme mit jeweils zwei Antriebskörpern 1, 7 und Wellen 3, 9 dargestellt. Das Prinzip lässt sich aber auch auf mehr als zwei Antriebskörper und mehr als zwei Antriebswellen verallgemeinern. So können problemlos weitere über Koppeleinrichtungen gekoppelte Einzelantriebskörper angekoppelt werden.

Die Kopplung zwischen den Antriebskörpern 1, 7 wird in den Fig. 1 - 5 durch als Festkörpergelenke dargestellte Koppeleinrichtungen 12, 12°, 12* ausgebildet. Jedoch sind auch andere gelenkige Verbindungen, z.B. mehrteilige Scharniergelenke oder Kugelkopfgelenke umsetzbar, welche eine Kraftübertragung und/oder Bewegungsübertragung über die gelenkige Verbindung ermöglichen. Mindestens einer der Festkörperaktoren 5 wirkt so auf den gesamten Doppel-Antriebskörper. Seine mechanische Leistung wird auf beide Antriebswellen übertragen. Die anderen Festkörperaktoren 4, 10 wirken optional jeweils nur auf eine der Antriebswellen 3, 9. Insbesondere die Kombination der Auslenkungen des Festkörperaktors 5 / der Festkörperaktoren 4, 5, 10; 10° die gemeinsam auf mindestens zwei Antriebswellen 3, 9 wirken und der dazu komplementären Festkörperaktoren führt zu einer kreisförmigen Translation mindestens eines Teils des Doppel-Antriebskörpers aus den beiden gekoppelten Antriebskörpern 1, 7 und damit zur Drehbewegung der zugehörigen Antriebswelle 3, 9. Das heißt, die Wellen 3, 9 können nahezu unabhängig voneinander angesteuert werden, wobei die Drehzahlen gegebenenfalls voneinander abhängig sind. Drehrichtung, Start und Stopp sind unabhängig voneinander über die Ansteuerfunktionen der Festkörperaktoren 4, 5, 10 einstellbar.

## Patentansprüche

1. Festkörperaktor-Antriebsvorrichtung mit
- einem ersten Antriebskörper (1),
- einer Aktoröffnung (2) in dem ersten Antriebskörper (1),
- einer in die Aktoröffnung (2) zumindest hineinführenden ersten Welle (3) und
- einem ersten und einem zweiten Festkörperaktor (4, 5; 4°, 5°) zum Antreiben des Antriebskörpers (1) zu einer die Welle (3) in Rotation (ω) versetzenden translatorischen Bewegung,
**dadurch gekennzeichnet, dass**
- ein zweiter Antriebskörper (7) mit einer Antriebskörperöffnung (8) über eine Koppeleinrichtung (12; 12°; 12*) an dem ersten Antriebskörper (1) angekoppelt ist und
- ein dritter Festkörperaktor (10; 10°) am zweiten Antriebskörper (7) angekoppelt ist zum Antreiben des zweiten Antriebskörpers (7) und einer in dessen Antriebskörperöffnung (8) zumindest hineinführenden zweiten Welle (9).

2. Festkörperaktor-Antriebsvörrichtung nach Anspruch 1, bei welcher der zweite Festkörperaktor (5) sowohl den ersten als auch den zweiten Antriebskörper (7) direkt antreibend angeordnet ist.

3. Festkörperaktor-Antriebsvorrichtung nach Anspruch 2, bei welcher der zweite Festkörperaktor (5) die Koppeleinrichtung (12) seitlich übergreifend angeordnet ist.

4. Festkörperaktor-Antriebsvorrichtung nach einem vorstehenden Anspruch, bei welcher die Koppeleinrichtung (12; 12°, 12*) derart angeordnet ist, eine Antriebsbewegung des ersten und/oder des zweiten Festkörperaktors (4, 5; 4°, 5°) auf den zweiten Antriebskörper (7) zumindest anteilig zu übertragen.

5. Festkörperaktor-Antriebsvorrichtung nach einem vorstehenden Anspruch, bei welcher die Koppeleinrichtung (12; 12°, 12*) angeordnet ist, eine Antriebsbewegung des dritten Festkörperaktors (10; 10°) auf den ersten Antriebskörper (1) zumindest anteilig zu übertragen.

6. Festkörperaktor-Antriebsvorrichtung nach einem vorstehenden Anspruch, bei welcher die Koppeleinrichtung (12; 12*) als eine gelenkige Verbindung ausgebildet ist zum Verschwenken des ersten Antriebskörpers (1) gegenüber dem zweiten Antriebskörper (7).

7. Festkörperaktor-Antriebsvorrichtung nach einem vorstehenden Anspruch, bei welcher die Koppeleinrichtung (12°) als eine gelenkige Verbindung ausgebildet ist zum Versetzen des ersten Antriebskörpers (1) seitlich zum zweiten Antriebskörper (7) in einer zueinander parallelen Hauptbewegungsrichtung.

8. Festkörperaktor-Antriebsvorrichtung nach einem vorstehenden Anspruch, bei welcher die Koppeleinrichtung (12; 12°; 12*) die beiden Antriebskörper (1, 7) als ein Festkörpergelenk einstückig ausbildend verbindet.

9. Festkörperaktor-Antriebsvorrichtung nach einem vorstehenden Anspruch, bei welcher die Antriebskörper (1, 7) mittels der Koppeleinrichtung (12*) derart gekoppelt sind, dass die beiden Antriebskörper (1, 7) bezüglich Durchtrittsachsen ihrer Antriebskörperöffnungen (2, 8) nicht achsparallel zueinander angeordnet und/oder in Bewegung versetzbar sind.

10. Festkörperaktor-Antriebsvorrichtung nach einem vorstehenden Anspruch mit einer Steuereinrichtung (15) zum Ansteuern der Festkörperaktoren (4, 5, 10; 4°, 5°, 10°) zum voneinander unabhängigen Antreiben der beiden Wellen (3, 9).

11. Verfahren zum Antreiben einer Festkörperaktor-Antriebsvorrichtung nach einem vorstehenden Anspruch, bei welchem die zumindest drei Festkörperaktoren (4, 5, 10; 4°, 5°, 10°) aufeinander abgestimmt angesteuert werden zum eigenständigen Antreiben der ersten Welle (3) unabhängig von einer Rotation der zweiten Welle (9).

12. Verfahren nach Anspruch 11, bei welchem die erste und die zweite Welle (3, 9) voneinander drehzahlabhängig angesteuert werden.

13. Verfahren nach Anspruch 11 oder 12, bei dem die beiden Wellen (3, 9) bezüglich Drehrichtung, Start und Stopp voneinander unabhängig angesteuert werden.

14. Verfahren nach einem der Ansprüche 11 bis 13, bei dem eine Drehrichtung der Wellen (3, 9) durch eine Phasenlage eines Ansteuersignals des ersten und/oder zweiten Festkörperaktors (4°, 5°) in Bezug auf eine Ansteuerfunktion des dritten Festkörperaktors (10°) eingestellt wird.

## Claims

1. Solid-state actuator drive apparatus comprising
- a first drive body (1),
- an actuator opening (2) in the first drive body (1),
- a first shaft (3) leading at least into the actuator opening (2) and
- a first and a second solid-state actuator (4, 5; 4°, 5°) for driving the drive body (1) to effect a translational movement that causes the shaft (3) to rotate (ω),
**characterised in that**
- a second drive body (7) with a drive body opening (8) is coupled to the first drive body (1) by means of a coupling device (12; 12°; 12*) and
- a third solid-state actuator (10; 10°) is coupled to the second drive body (7) for driving the second drive body (7) and a second shaft leading at least into the drive body opening (8) thereof.

2. Solid-state actuator drive apparatus according to claim 1, in which the second solid-state actuator (5) is arranged so as to directly drive both the first and also the second drive body (7).

3. Solid-state actuator drive apparatus according to claim 2, in which the second solid-state actuator (5) is arranged so as to overlap the sides of the coupling device (12).

4. Solid-state actuator drive apparatus according to a preceding claim, in which the coupling device (12, 12°, 12*) is arranged so as to transfer a drive movement of the first and/or second solid-state actuator (4, 5; 4°, 5°) onto the second drive body (7), at least partially.

5. Solid-state actuator drive apparatus according to a preceding claim, in which the coupling device (12; 12°, 12*) is arranged so as to transfer a drive movement of the third solid-state actuator (10, 10°) onto the first drive body (1), at least partially.

6. Solid-state actuator drive apparatus according to a preceding claim, in which the coupling device (12; 12*) is embodied as a hinged connection so as to swivel the first drive body (1) relative to the second drive body (7).

7. Solid-state actuator drive apparatus according to a preceding claim, in which the coupling device (12°) is embodied as a hinged connection so as to displace the first drive body (1) laterally relative to the second drive body (7) in a main movement direction which is parallel thereto.

8. Solid-state actuator drive apparatus according to a preceding claim, in which the coupling device (12; 12°; 12*) connects the two drive bodies (1, 7) so as to be embodied in one piece as a solid body hinge.

9. Solid-state actuator drive apparatus according to a preceding claim, in which the drive bodies (1, 7) are coupled to one another by means of the coupling device (12*) such that the two drive bodies (1, 7) are not arranged axially parallel to one another in respect of passage axes of their drive body openings (2, 8) and/or can be set in motion.

10. Solid-state actuator drive apparatus according to a proceeding claim, comprising a control device (15) for controlling the solid-state actuators (4, 5, 10, 4°, 5°, 10°) in order to drive both shafts (3,9) independently of one another.

11. Method for driving a solid-state actuator drive apparatus according to a preceding claim, in which the at least three solid-state actuators (4, 5, 10; 4°, 5°, 10°) are controlled in synchrony with one another so as to automatically drive the first shaft (3) independently of a rotation of the second shaft (9).

12. Method according to claim 11, in which the first and the second shaft (3, 9) are controlled in a speed-dependent manner.

13. Method according to claim 11 or 12, in which the two shafts (3, 9) are controlled independently of one another in respect of rotary direction, start and stop.

14. Method according to one of claims 11 to 13, in which a rotary direction of the shafts (3, 9) is set by a phase position of a control signal of the first and/or second solid-state actuator (4°, 5°) in respect of a control function of the third solid-state actuator (10°).

## Revendications

1. Dispositif d'entraînement à actionneur à corps solide avec
- un premier corps d'entraînement (1),
- une ouverture d'actionneur (2) dans le premier corps d'entraînement (1),
- un premier arbre (3) qui, à tout le moins, pénètre dans l'ouverture d'actionneur (2) et
- un premier et un deuxième actionneurs à corps solide (4, 5 ; 4°, 5°) pour entraîner le corps d'entraînement (1) dans un mouvement de translation qui met l'arbre (3) en rotation (ω),
**caractérisé en ce que**
- un deuxième corps d'entraînement (7) avec une ouverture de corps d'entraînement (8) est couplé au premier corps d'entraînement (1) par l'intermédiaire d'un dispositif de couplage (12 ; 12° ; 12*) et
- un troisième actionneur à corps solide (10 ; 10°) est couplé au deuxième corps d'entraînement (7) pour entraîner le deuxième corps d'entraînement (7) et un deuxième arbre (9) qui, à tout le moins, pénètre dans l'ouverture de corps d'entraînement (8) de celui-ci.

2. Dispositif d'entraînement à actionneur à corps solide selon la revendication 1, dans lequel le deuxième actionneur à corps solide (5) est agencé de manière à entraîner directement non seulement le premier, mais aussi le deuxième corps d'entraînement (7).

3. Dispositif d'entraînement à actionneur à corps solide selon la revendication 2, dans lequel le deuxième actionneur à corps solide (5) est agencé de manière à recouvrir latéralement le dispositif de couplage (12).

4. Dispositif d'entraînement à actionneur à corps solide selon une revendication précédente, dans lequel le dispositif de couplage (12 ; 12°, 12*) est agencé de manière à transmettre, au moins en partie, sur le deuxième corps d'entraînement (7) un mouvement d'entraînement du premier et/ou du deuxième actionneur à corps solide (4, 5 ; 4°, 5°).

5. Dispositif d'entraînement à actionneur à corps solide selon une revendication précédente, dans lequel le dispositif de couplage (12 ; 12°, 12*) est agencé de manière à transmettre, au moins en partie, un mouvement d'entraînement du troisième actionneur à corps solide (10 ; 10°) sur le premier corps d'entraînement (1).

6. Dispositif d'entraînement à actionneur à corps solide selon une revendication précédente, dans lequel le dispositif de couplage (12 ; 12*) se présente sous la forme d'une liaison articulée pour faire pivoter le premier corps d'entraînement (1) par rapport au deuxième corps d'entraînement (7).

7. Dispositif d'entraînement à actionneur à corps solide selon une revendication précédente, dans lequel le dispositif de couplage (12°) se présente sous la forme d'une liaison articulée pour décaler le premier corps d'entraînement (1) latéralement par rapport au deuxième corps d'entraînement (7) dans un sens de mouvement principal parallèlement entre eux.

8. Dispositif d'entraînement à actionneur à corps solide selon une revendication précédente, dans lequel le dispositif de couplage (12 ; 12° ; 12*) relie les deux corps d'entraînement (1, 7) de manière à constituer d'une seule pièce une articulation à corps solide.

9. Dispositif d'entraînement à actionneur à corps solide selon une revendication précédente, dans lequel les corps d'entraînement (1, 7) sont couplés de manière telle, au moyen du dispositif de couplage (12*), que, au regard d'axes traversants de leurs ouvertures de corps d'entraînement (2, 8), les deux corps d'entraînement (1, 7) ne sont pas disposés avec parallélisme des axes et/ou ne peuvent pas être mis en mouvement avec parallélisme des axes.

10. Dispositif d'entraînement à actionneur à corps solide selon une revendication précédente, avec un dispositif de commande (15) pour commander les actionneurs à corps solide (4, 5, 10 ; 4°, 5°, 10°) pour l'entraînement des deux arbres (3, 9) indépendamment l'un de l'autre.

11. Procédé pour entraîner un dispositif d'entraînement à actionneur à corps solide selon une revendication précédente, dans lequel les au moins trois actionneurs à corps solide (4, 5, 10 ; 4°, 5°, 10°) sont commandés de manière adaptée les uns aux autres aux fins de l'entraînement autonome du premier arbre (3) indépendamment d'une rotation du deuxième arbre (9).

12. Procédé selon la revendication 11, dans lequel le premier et le deuxième arbre (3, 9) sont commandés l'un par l'autre en fonction du régime.

13. Procédé selon la revendication 11 ou 12, dans lequel les deux arbres (3, 9) sont commandés indépendamment l'un de l'autre au regard du sens de rotation, du démarrage et de l'arrêt.

14. Procédé selon l'une des revendications 11 à 13, dans lequel un sens de rotation des arbres (3, 9) est réglé par une position de phase d'un signal de commande du premier et/ou du deuxième actionneur à corps solide (4°, 5°) au regard d'une fonction de commande du troisième actionneur à corps solide (10°).
